# EUROPEAN PATENT APPLICATION

(11) **EP 3 284 979 A2**
(43) Date of publication of application: **21.02.2018**
(21) Application number: 17177562.0
(22) Date of filing: 23.06.2017
(51) Int. Cl.: F16J 15/16, F16J 15/32, F16J 15/56

(54) **BONDED SEAL WITH INTEGRAL BACKUP RING**

(30) Priority: 26.07.2016 US 201615220268
(71) Applicant: Freudenberg Oil & Gas, LLC, Houston TX Texas 77040 (US)
(72) Inventor: Wallace, Brian A., Kingwood, TX Texas 77345 (US)
(74) Representative: Schaumburg und Partner Patentanwälte mbB

(57) **Abstract**

A bonded seal (10) includes a rigid annular carrier (14) having an annular recess (16) therein. An elastomer seal member (18) is bonded within the annular recess. A thermoplastic backup ring (20) is bonded to the elastomer seal member and disposed at an axial end of the annular recess and including elastomer material disposed between at least a portion of an outer diameter surface (20a) of the thermoplastic backup ring and the rigid annular carrier.

## Description

### FIELD

The present disclosure relates to a bonded seal with integral backup ring.

### BACKGROUND

This section provides background information related to the present disclosure which is not necessarily prior art.

When oil field tools are deployed down hole and need to engage a sealing component, the rigid portion of the sealing component needs to have a certain amount of annular clearance with respect to the seal surface of the traveling component to prevent contact that may cause damage. This annular clearance makes it very challenging to seal with a conventional bonded, elastomeric seal at elevated temperatures and pressure differentials. The elastomeric seal will tend to be damaged and can fail by extrusion.

### SUMMARY

This section provides a general summary of the disclosure, and is not a comprehensive disclosure of its full scope or all of its features.

The present disclosure provides a sealing solution that features an elastomer bonded to a rigid carrier. The bonded elastomer has, within the low pressure side of the seal, an insert made from thermoplastic, which acts to move as the elastomer is deformed under a pressure differential and eliminate the annular extrusion gap between two concentric tubular members to form a more robust seal than if it were not present.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
Figure 1 is a partial cross-sectional view of a seal for engaging a tool mandrel received in a seal bore according to a first embodiment;
Figure 2 is a partial cross-sectional view of a seal for engaging a tool mandrel received in a seal bore according to a second embodiment; and
Figure 3 is a partial cross-sectional view of a seal for engaging a tool mandrel received in a seal bore according to a third embodiment.

Corresponding reference numerals indicate corresponding parts throughout the several views of the drawings.

### DETAILED DESCRIPTION

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

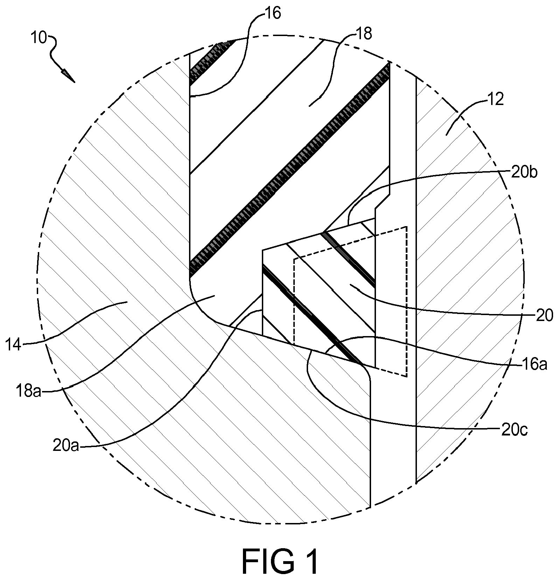

With reference to Figure 1, a seal assembly 10 is shown for sealing between a generally cylindrical outer surface of a mandrel tool 12 and an outer bore. The seal assembly 10 includes an annular rigid carrier 14 defining a radially outwardly extending annular recess 16 on an inner diameter surface thereof with an elastomer seal member 18 bonded within the annular recess 16. An annular thermoplastic insert 20 is axially provided on a low pressure side of the elastomer seal member 18 with the elastomer seal member including a portion 18a disposed between an outer diameter surface 20a of the thermoplastic insert 20 and the annular recess 16. When the elastomer 18 is deformed under a pressure differential, the thermoplastic insert 20 is pressed by the elastomer 18 to move in a radial inward direction to engage the outer diameter surface of the mandrel tool 12 and eliminate the annular gap between the concentric mandrel tool 12 and seal assembly 10 members to prevent extrusion of the elastomer 18 therethrough and provide for a more robust seal. In the embodiment shown in Figure 1, the elastomer seal member 18 is disposed along the outer diameter surface 20a and the side surface 20b facing the high pressure side of the thermoplastic insert 20. A side surface 20c facing the low pressure side is disposed against a side wall 16a of the recess 16. The side surface 20c and the side wall 16a can be angled relative to a plane orthogonal to an axis of the mandrel tool 12 in order to facilitate the movement of the thermoplastic insert 20 in a radially inward direction as illustrated in broken lines.

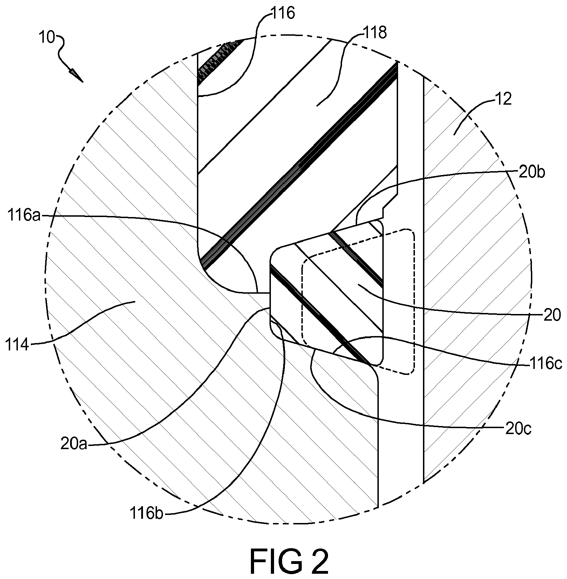

With reference to Figure 2, a second embodiment of the present disclosure provides an elastomer seal member 118 which is disposed along a side surface 20b of the thermoplastic insert 20 and along a portion, and more specifically one-half, of the outer diameter surface 20a of the thermoplastic insert 20. The amount of elastomer material of the seal member 118 can be specifically selected to provide a certain amount of travel of the thermoplastic insert 20 when the elastomer seal member 118 is deformed under pressure. A sidewall 116a of the annular recess 116 in the rigid carrier 114 includes a step region 116b for receiving the thermoplastic insert 20. The side surface 20c and the side wall 116c can be angled relative to a plane orthogonal to an axis of the mandrel tool 12 in order to facilitate the movement of the thermoplastic insert 20 in a radially inward direction (illustrated in broken lines) toward the mandrel tool 12 when pressure is applied to the seal assembly 10.

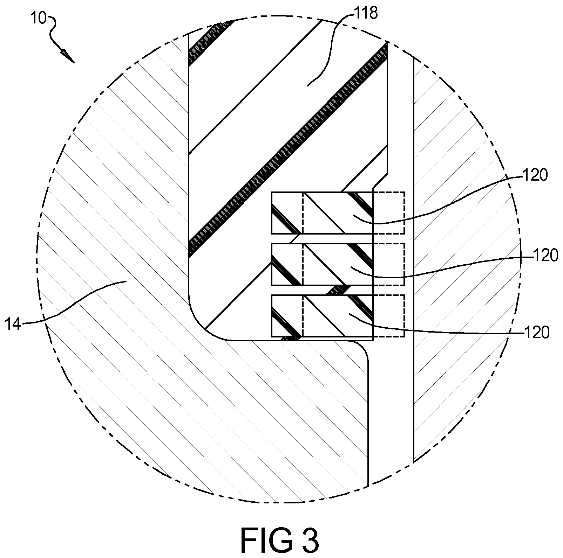

With reference to Figure 3, the thermoplastic insert can be modified to include multiple annular thermoplastic insert members 120 that are axially aligned and can provide a series of backup rings for preventing extrusion of the elastomer seal member 118 through a gap formed between the rigid carrier 14 and the tool mandrel 12. In the example shown, three insert members 120 are shown, although more or fewer insert members can be used. Each of the insert members 120 are shown with a rectangular cross section. Elastomer material 118 is disposed between the insert members 120 which allows for limited relative radial movement (illustrated in broken lines) between the insert members 120 when pressure is applied to the seal assembly 10.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A bonded seal, comprising:
a rigid annular carrier having an annular recess therein;
an elastomer seal member bonded within the annular recess; and
a thermoplastic backup ring bonded to the elastomer seal member and disposed at an axial end of the annular recess and including elastomer material disposed between at least a portion of an outer diameter surface of the thermoplastic backup ring and the rigid annular carrier.

2. The bonded seal according to claim 1, wherein the elastomer material is disposed between the entire outer diameter surface of the thermoplastic backup ring and the rigid annular carrier.

3. The bonded seal according to claim 1, wherein the thermoplastic backup ring includes plural thermoplastic backup rings each bonded to the elastomer seal member.

4. The bonded seal according to claim 1, wherein the annular recess includes a sidewall surface and the thermoplastic backup ring is disposed against the sidewall surface.

5. The bonded seal according to claim 1, wherein the annular recess includes a sidewall surface having a step region and the thermoplastic backup ring is disposed in the step region.
